# EUROPEAN PATENT SPECIFICATION

(11) **EP 1 122 847 B1**
(45) Date of publication and mention of the grant of the patent: **08.10.2003**
(21) Application number: 01100438.9
(22) Date of filing: 08.01.2001
(51) Int. Cl.: H02G 9/06

(54) **Plastic material coil hose for electrical cables and ducts and the mehtod for making it**
Gewickelter Schlauch aus Kunststoff für elektrische Kabel und Leitungen sowie dessen Herstellungsverfahren
Tuyau bobiné en matériau plastique pour câbles électriques et conduites ainsi que son procédé de fabrication

(30) Priority: 03.02.2000 IT MI200173
(43) Date of publication of application: 08.08.2001
(73) Proprietor: Tamborini, Ariberto, 21020 Daverio (Varese) (IT); Tamborini, Giancarlo, 21020 Daverio (Varese) (IT)
(72) Inventor: Tamborini, Ariberto, 21020 Daverio (Varese) (IT); Tamborini, Giancarlo, 21020 Daverio (Varese) (IT)
(74) Representative: Cicogna, Franco

(56) References cited:
- US-A- 3 919 026
- US-A- 4 892 442
- PATENT ABSTRACTS OF JAPAN vol. 005, no. 135 (M-085), 27 August 1981 (1981-08-27) & JP 56 069145 A (TAIGAASU POLYMER KK), 10 June 1981 (1981-06-10)

## Description

### BACKGROUND OF THE INVENTION

The present invention relates to a plastic material coil hose, specifically designed for holding electric cables and ducts therein.

The invention also relates to a method for making said plastic material coil hose or pipe.

As is known, in several industrial applications are used plastic material coil hoses or pipes, which are made starting from a hot extruded plastic material continuous strip, which is wound on a pulling mandrel, thereby forming the tubular element.

The strip is conventionally formed by materials having suitable mechanical characteristics, in order to provide good strength tubular elements or hoses.

A problem to be solved is that of easily engaging electric cables in the formed hoses.

This operation frequently requires that slippery products and pulling mechanical means be used, the latter frequently subjecting the electrical cables to undesired stresses.

Moreover, with the prior art solutions, it frequently occurs that, in a case of particularly complex path arrangements, such as in the presence of bends or the like, it is necessary to provide the installation with wells for properly performing the connection operations of the electric cables, with consequent safety, cost, labour problems, as well as with the consequent reduction of the electrical conductivity properties.

This problem is particularly serious for electric ducts to be connected to the ground, in which the cable fitting clamps must be frequently lubricated, or grease processed, in order to prevent. any oxidation phenomena susceptible to greatly increase their electrical resistance from occurring.

The document US-A-3 919 026 discloses a plastic material coil hose constructed substantially acording to the preamble of claim 1 and made by a method according to the preamble of claim 8 respectively.

### SUMMARY OF THE INVENTION

Accordingly, the aim of the present invention is to overcome the above mentioned drawbacks, by providing a plastic material coil hose, specifically designed for holding electric cables and ducts therein, affording the possibility of easily and quickly engaging the electric cables therein, said electric cables being adapted to easily slide inside the coil hose, without requiring any specifically designed pulling means.

Within the scope of the above mentioned aim, a main object of the present invention is to provide such a coil hose or pipe, allowing to greatly reduce the connection well number, thereby also obviating the need of performing a lot of cable connections, with the consequent related advantages.

Yet another object of the present invention is to provide such a coil hose which, owing to its constructional features, is reliable and safe in operation.

Yet another object of the present invention is to provide such a plastic material coil hose, specifically designed for holding electric cables and ducts therein, which is competitive from a mere economic standpoint.

The above-mentioned aim and objects are achieved by a plastic material coil hose, specifically designed for holding electric cables and ducts therein, according to claim 1, and by a method for making a plastic material coil hose according to claim 8.

Further embodiments are defined in the dependent claims.

### BRIEF DESCRIPTION OF THE DRAWINGS

The invention will become more apparent hereinafter from the following detailed disclosure of a plastic material coil hose, specifically designed for holding electric cables and ducts therein, which is illustrated, by way of an indicative, but not limitative, example, in the accompanying drawings, where:

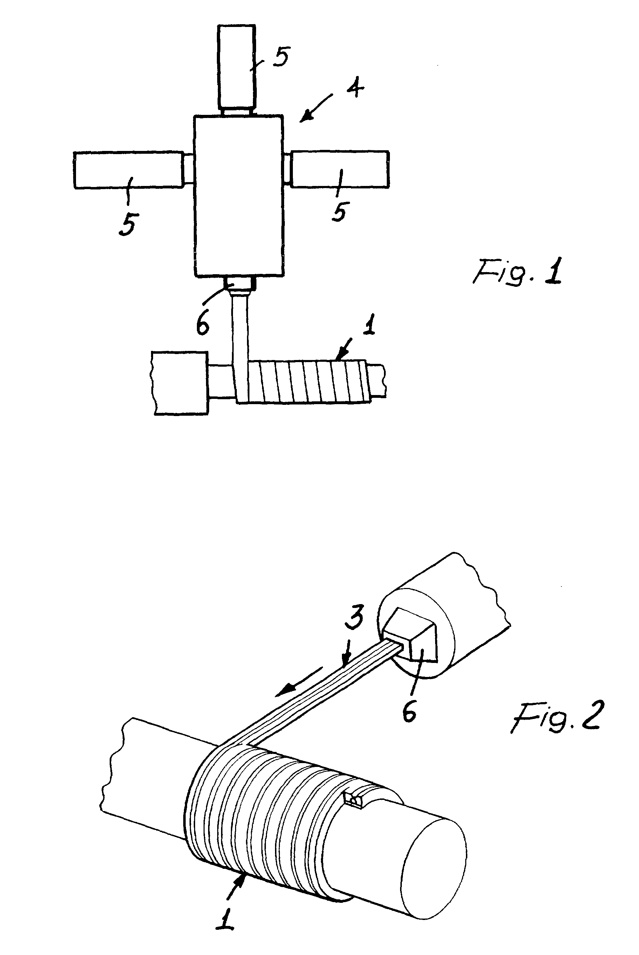

Figure 1 is a schematic view illustrating an extruder assembly including a plurality of extruder devices;
Figure 2 illustrates an operating step for making the coil hose or pipe;

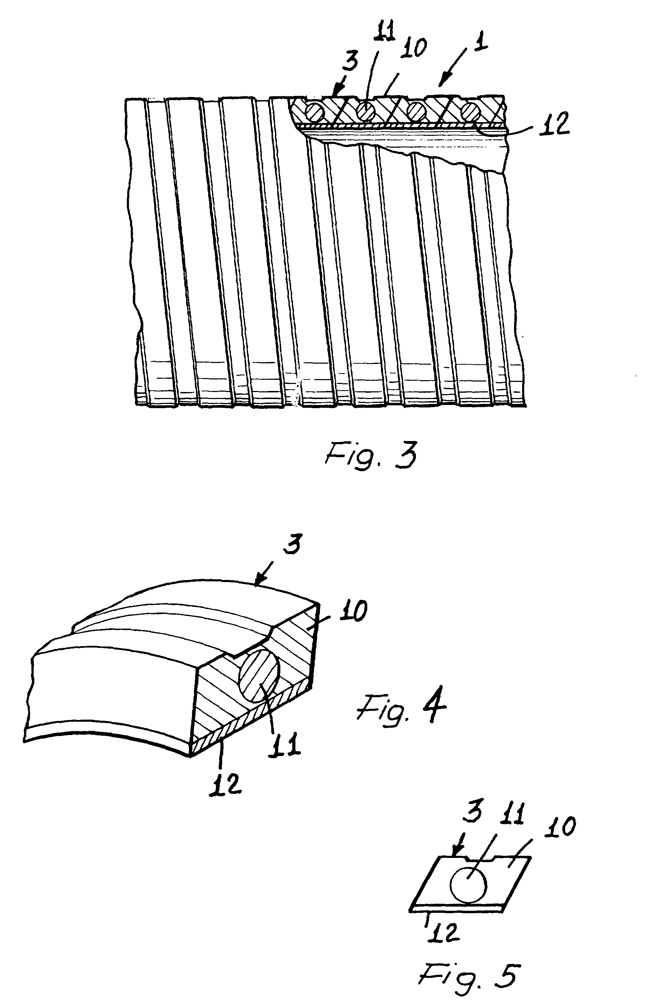

Figure 3 is a partially cross-sectioned view illustrating the coil hose or pipe according to the invention;
Figure 4 is a schematic perspective view illustrating a strip element used for forming the coil hose or pipe according to the present invention; and
Figure 5 is a cross-sectional view illustrating the strip.

### DESCRIPTION OF THE PREFERRED EMBODIMENT

With reference to the number references of the above mentioned figures, the coil hose or pipe, according to the invention, which has been generally indicated by the reference number 1, comprises a flexible plastic material body, which is made starting from a strip 3, provided by a die 6, mounted on an extruder head 4, supplied by a plurality of extruder devices 5.

The strip 3 comprises a strip body 10, advantageously consisting of a plasticized PVC material, which includes, in the inside thereof, a reinforcement element 11 made of a rigid PVC material.

On the inner edge is provided a slippery plastic material layer 12, which advantageously comprises a semirigid PVC material.

According to a preferred embodiment, said slippery plastic material layer is made by mixing the following components, in the indicated weight proportions:

| | Kg |
|---|---|
| K 70 suspension PVC resin | 100 |
| Di-2-ethylhexyl phtalate | 32 |
| Diphenyl-decyl phosphite | 0.5 |
| Ba/Zn soap based compound | 1.4 |
| Epoxided soybean oil | 4 |
| Esterified wax from montan acids | 0.4 |
| Stearic acid | 0.4 |

The above mentioned components can be replaced by other chemically equivalent elements and, moreover, the indicated weight ratios can be varied up to ± 30%.

The provision of the mentioned slipper plastic material allows the electric cables to be easily engaged in the subject hose or pipe, while allowing the cables to be easily driven through bent or the like pipe portions.

From the above disclosure it should be apparent that the invention fully achieves the intended aim and objects.

In particular, the fact is to be pointed out that the slippery plastic material layer allows to easily engage the cables without using lubricating materials, thereby making the electric cable insertion operations much more simple, and reducing the cable connections to a minimum.

The invention, as disclosed, is susceptible to several modifications and variations, all of which will come within the scope of the invention.

Moreover, all the constructional details can be replaced by other technically equivalent elements.

## Claims

1. A plastic material coil hose or pipe (1), specifically designed for holding electric cables and ducts therein, comprising a flexible plastic material body comprising a strip (3) with a reinforcement element (11) embedded in said strip and arranged in a coil pattern, **characterized in that** said coil hose (1) further comprises an inner slippery plastic material layer (12) on its inner wall, said layer being part of the inner face of the strip, when the latter is in a coiled condition.

2. A coil hose, according to the preceding claim, **characterized in that** said inner slippery plastic material layer (12) consists of a semirigid PVC material.

3. A coil hose, according to the preceding claims, **characterized in that** said inner slippery plastic material layer (12) comprises, by weight:
| | Kg |
|---|---|
| K 70 suspension PVC resin | 100 |
| Di-2-ethylhexyl phtalate | 32 |
| Diphenyl-decyl phosphite | 0.5 |
| Ba/Zn soap based compound | 1.4 |
| Epoxided soybean oil | 4 |

4. A coil hose, according to one or more of the preceding claims, **characterized in that** said inner slippery plastic material layer (12) comprises 0.4 by weight of an esterified wax derived from montan acids.

5. A coil hose, according to one or more of the preceding claims, **characterized in that** said inner slippery plastic material layer (12) comprises 0.4 by weight of stearic acid.

6. A coil hose, according to one or more of the preceding claims, **characterized in that** said strip (3) has a plasticized PVC body (10).

7. A coil hose, according to one or more of the preceding claims, **characterized in that** said reinforcement element (11) comprises a rigid PVC material.

8. A method for making a plastic material coil hose, specifically designed for holding electric cables and ducts therein, according to claim 1, said method comprising the step of extruding, through an extruder assembly (4), a strip (3) having a flexible plastic material body (10) with an inner reinforcement element (11) made of a substantially rigid plastic material, **characterized in that** said method further comprises the step of providing a slippery plastic material layer (12) on a strip face, which is directed to the inside of said coil hose (1).

## Patentansprüche

1. Spiralschlauch oder -rohr (1) aus einem Plastikmaterial, insbesondere zum Aufnehmen von elektrischen Kabeln und Leitungen darin, welches einen Körper aus flexiblem Plastikmaterial aufweist, der einen Streifen (3) mit einem Verstärkungselement (11) aufweist, welches in dem Streifen eingebettet und in einem Spiralmuster angeordnet ist,
**dadurch gekennzeichnet, dass**
der Spiralschlauch (1) des weiteren eine innere, glatte Plastikmaterial-Schicht (12) an ihrer inneren Wandung aufweist, wobei die Schicht Teil der inneren Fläche des Streifens ist, wenn sich derselbe in einem aufgewickelten Zustand befindet.

2. Spiralschlauch gemäß dem vorhergehenden Anspruch,
**dadurch gekennzeichnet, dass**
die innere, glatte Plastikmaterial-Schicht (12) aus einem halbstarren PVC-Material besteht.

3. Spiralschlauch gemäß den vorhergehenden Ansprüchen,
**dadurch gekennzeichnet, dass**
die innere, glatte Plastikmaterial-Schicht (12) bezogen auf das Gewicht folgendes aufweist:
| | kg |
|---|---|
| K 70 Suspension PVC-Harz | 100 |
| Di-2-ethylhexyl-Phtalat | 32 |
| Diphenyl-decyl-Phosphit | 0,5 |
| Ba/Zn-Verbundwerkstoff auf Seifenbasis | 1,4 |
| Epoxidiertes Sojabohnenöl | 4 |

4. Spiralschlauch nach einem oder mehreren der vorhergehenden Ansprüche,
**dadurch gekennzeichnet, dass**
die innere, rutschfähige Plastikmaterial-Schicht (12) bezogen auf das Gewicht 0,4 eines veresterten Wachses aufweist, welches aus Montansäuren hergestellt ist.

5. Spiralschlauch nach einem oder mehreren der vorhergehenden Ansprüchen,
**dadurch gekennzeichnet, dass**
die innere, glatte Plastikmaterial-Schicht bezogen auf das Gewicht 0,4 Stearinsäure aufweist.

6. Spiralschlauch nach einem oder mehreren der vorhergehenden Ansprüchen,
**dadurch gekennzeichnet, dass**
der Streifen (3) einen plastifizierten PVC-Körper (10) aufweist.

7. Spiralschlauch nach einem oder mehreren der vorhergehenden Ansprüchen,
**dadurch gekennzeichnet, dass**
das Verstärkungselement (11) ein starres PVC-Material aufweist.

8. Verfahren zum Herstellen eines Spiralschlauches aus Plastikmaterial, insbesondere zum Aufnehmen von elektrischen Kabeln und Leitungen darin, nach Anspruch 1, wobei das Verfahren den Schritt des Extrudierens eines Streifens (3) mit einem flexiblen Plastikmaterial-Körper (10) mit einem inneren Verstärkungselement (11), welcher aus einem im wesentlichen starren Plastikmaterial hergestellt ist, durch eine Extrudieranordnung (4) aufweist,
**dadurch gekennzeichnet, dass**
das Verfahren des weiteren den Schritt des Bereitstellens einer glatten Plastikmaterialschicht (12) auf einer Streifenfläche aufweist, welche in Richtung der Innenseite des Spiralschlauchs (1) gerichtet ist.

## Revendications

1. Tuyau bobiné ou tube (1) en matériau plastique, spécifiquement étudié pour maintenir des câbles électriques et conduits, comprenant un corps flexible en matériau plastique comprenant une bande (3) avec un élément de renfort (11) encastré dans ladite bande et disposé sur une matrice d'enroulement ("coil pattern"), **caractérisé en ce que** ledit tuyau bobiné (1) comprend en outre une couche interne (12) glissante en matériau plastique sur sa paroi interne, ladite couche étant une partie de la face interne de la bande, lorsque cette dernière est dans une condition enroulée.

2. Tuyau bobiné, selon la revendication précédente, **caractérisé en ce que** ladite couche interne (12) glissante en matériau plastique est composée de matériau PVC semi-rigide.

3. Tuyau bobiné, selon les revendications précédentes, **caractérisé en ce que** ladite couche interne (12) glissante en matériau clastique comprend, en poids :
| | Kg |
|---|---|
| Résine PVC en suspension K 70 | 100 |
| Di-2-éthylhexyle phtalate | 32 |
| Diphényl-décyl phosphite | 0,5 |
| Composé à base de savon Ba / Zn | 1,4 |
| Huile de soja époxy | 4 |

4. Tuyau bobiné, selon l'une quelconque des revendications précédentes, **caractérisé en ce que** ladite couche interne (12) glissante en matériau plastique comprend 0,4 en poids d'une cire estérifiée dérivée des acides minéraux.

5. Tuyau bobiné, selon l'une quelconque des revendications précédentes, **caractérisé en ce que** ladite couche interne (12) glissante en matériau plastique comprend 0,4 en poids d'acide stéarique.

6. Tuyau bobiné, selon l'une quelconque des revendications précédentes, **caractérisé en ce** ladite bande (3) possède un corps (10) plastifié en PVC.

7. Tuyau bobiné, selon l'une quelconque des revendications précédentes, **caractérisé en ce que** ledit élément de renfort (1.1) comprend un matériau rigide en PVC.

8. Procédé de fabrication d'un tuyau bobiné en matériau plastique, spécifiquement étudié pour maintenir des câbles électriques et conduits, selon la revendication 1, ledit procédé comprenant l'étape d'extrusion, par un dispositif d'extrusion (4), d'une bande (3) présentant un corps (10) flexible en matériau plastique avec un élément interne de renfort (11) fabriqué en un matériau plastique sensiblement rigide, **caractérisé en ce que** ledit procédé comprend en outre l'étape d'application d'une couche (12) glissante en matériau plastique sur une face de la bande, qui est dirigée vers l'intérieur dudit tuyau bobiné (1).
